# EUROPEAN PATENT SPECIFICATION

(11) **EP 4 431 355 B1**
(45) Date of publication and mention of the grant of the patent: **24.06.2026**
(21) Application number: 23162604.5
(22) Date of filing: 17.03.2023
(51) Int. Cl.: B60W 30/18, B60W 30/095, B60W 50/08

(54) **VEHICLE BRAKE CONTROL SYSTEM AND METHOD THEREOF**
FAHRZEUGBREMSSTEUERUNGSSYSTEM UND VERFAHREN DAFÜR
SYSTÈME DE COMMANDE DE FREIN DE VÉHICULE ET PROCÉDÉ ASSOCIÉ

(43) Date of publication of application: 18.09.2024
(73) Proprietor: Zenseact AB, 417 56 Gothenburg (SE)
(72) Inventor: NORDIN, Oskar, 417 60 Göteborg (SE)
(74) Representative: Zacco Sweden AB

(56) References cited:
- US-A1- 2020 207 212
- US-A1- 2020 298 709
- US-A1- 2022 105 925

## Description

### TECHNICAL FIELD

The disclosed technology relates to methods and systems for controlling a braking system of a vehicle. In particular, but not exclusively the aspects and embodiments of the disclosed technology relate to enhancing a braking force of the braking system of the vehicle comprising a one-pedal driving (OPD) control system.

### BACKGROUND

A majority of electric or hybrid vehicles nowadays are equipped with systems such as one pedal driving (OPD) for operating the vehicle. The OPD systems may be effectively utilized for blending operation of actuators in the vehicle. For example, fully separated brake systems and propulsive systems, wherein one system merely realizes the request from the brake pedal and other system realizes requests from the accelerator pedal, may no longer be advantageous. These requests can be largely merged, and the most optimal actuator for the given situation may be used to perform the required operations.

Operating the vehicles by means of the OPD systems provides several advantages such as utilizing regenerative braking, which are designed to contribute to reducing fuel consumption, emission and saving battery charge. With regenerative braking, the kinetic energy of a vehicle can be converted into electric energy, which can typically be stored in an auxiliary battery system for future use or be used for recharging the main operational battery packs of the vehicle.

However, the OPD systems may interfere with the user experience of the drivers by applying somewhat unusual patterns of braking and accelerating and thus make the driving experience jerky and unpleasant. Therefore, many manufacturers provide the users with options for deactivating or for limited use of such systems. As a result, many features and opportunities provided by the OPD systems may remain unexplored.

What is more is that in addition to improving the driver experience while using OPD systems, the potential features of such systems for improving traffic safety may be totally ignored.

There is thus a need in the art for novel and improved solutions and applications involving OPD systems for addressing complex road traffic scenarios with improved accuracy, agility and certainty, thereby improving traffic safety as well as user experience.

US 2020/207212 A1 discloses a braking control apparatus to be installed an electric vehicle, which includes an acceleration and deceleration operation member, a controller, and a recognizer. The acceleration and deceleration operation member receives an acceleration request in accordance with an operation amount in a first direction from a neutral position, and receive a deceleration request in accordance with an operation amount in a second direction from the neutral position. The controller controls an amount of power regenerated by a rotary electric machine driven by wheels in accordance with the operation amount in the second direction. The recognizer recognizes a preceding vehicle traveling ahead of the electric vehicle. Upon detection of the preceding vehicle at a relative distance from the electric vehicle that is equal to or less than a threshold, the controller performs braking suppression control to decrease the amount of power regenerated in accordance with the operation amount in the second direction.

### SUMMARY

The herein disclosed technology seeks to mitigate, alleviate or eliminate one or more of the above-identified deficiencies and disadvantages in the prior art to address various problems relating to improving safety and utilizing an efficient braking functionality by means of the OPD system.

Various aspects and embodiments of the disclosed invention are defined below and in the accompanying independent and dependent claims. The term exemplary is in the present context to be understood as serving as an instance, example or illustration.

A first aspect of the disclosed technology comprises a method. The computer-implemented method is presented for generating an enhanced braking force for a braking system of a vehicle comprising a one-pedal driving (OPD) control system. The method comprises obtaining a near-collision warning signal from a collision warning system of the vehicle, the near-collision warning signal being representative of a collision event determined based on sensor data representative of a surrounding environment of the vehicle. The method further comprises obtaining an operational position of an accelerator pedal of the vehicle configured for operating the vehicle by means of the OPD control system. Further, the method comprises generating, based on the obtained near-collision warning signal, a corresponding negative torque reinforcement factor to be applied to a normal braking force of the vehicle associated with each obtained operational position of the accelerator pedal. The generated negative torque reinforcement factor correlates with a determined severity indicator of the determined collision event. Moreover, the corresponding negative torque reinforcement factor is generated based on a calculated time-to-collision (TTC) parameter for the determined collision event, comprised in the determined severity indicator of the determined collision event, and wherein the calculated time-to-collision parameter is larger than a pre-collision temporal threshold value for activation of an automated emergency braking system of the vehicle. In response to the obtained operational position of the accelerator pedal corresponding to a predetermined operational position, the method further comprises applying the generated negative torque reinforcement factor to the normal braking force of the vehicle associated with the predetermined operational position. The method further comprises enhancing the braking force of the braking system of the vehicle with the applied negative torque reinforcement factor.

In several embodiments, the predetermined operational position of the accelerator pedal may relate to an operational angle of the accelerator pedal determined by an amount of stroke applied to the accelerator pedal by the driver of the vehicle. The operational angle of the accelerator pedal may comprise any one of a predetermined range of angles of the accelerator pedal corresponding to a predetermined range of strokes applied to the accelerator pedal by the driver. Further, the operational angle of the accelerator pedal may comprise an operational position of the accelerator pedal corresponding to a complete release of the accelerator pedal by the driver i.e. substantially no stroke applied to the pedal.

In several embodiments, the method may further comprise resetting braking force to the normal braking force of the vehicle when it is determined that the determined collision event may be avoided.

In several aspects and embodiments, the vehicle may comprise an Automated Driving System, ADS. In several aspects and embodiments, the method may be performed by a control system of the vehicle comprising processing circuitry configured for performing the various embodiments and steps of the method. In several aspects and embodiments, the method may be performed by a control system of the server or data center comprising processing circuitry configured for performing the various embodiments and steps of the method.

The present inventor has further realized that by the proposed solution herein, a preventive system and method can be implemented for improving traffic safety and driver reaction times by applying the generated brake gain to the normal braking force of the brake system of the vehicle upon determination of a near collision event. Further, the reaction of the driver in decelerating or releasing the acceleration pedal operating the vehicle in the OPD mode is advantageously registered and used for application of a proper corresponding brake gain calculated for each predetermined operation position of the accelerator pedal. This way, even the instances when the driver has not yet made a decision to fully release the accelerator pedal, but is in a transition zone for making such decision, is also taken into account. Further, significant deceleration is provided to the vehicle even before the driver has actuated a braking pedal of the vehicle, thus effectively preventing collision effects while improving the overall driving experience.

Executable instructions for performing these functions and embodiments of the method are, optionally, included in a non-transitory computer-readable storage medium or other computer program product configured for execution by one or more processors.

According to a second aspect, there is provided a (non-transitory) computer-readable storage medium comprising instructions which, when executed by one or more processors of a computing device of a vehicle comprising an OPD control system, causes the computing device to carry out the method according to any one of the embodiments of the method disclosed herein.

According to a third aspect, there is provided a computer program product comprising instructions which, when the program is executed by one or more processors of a computing device of a vehicle comprising an OPD control system, causes the computing device to carry out the method according to any one of the embodiments of the method disclosed herein.

According to a further fourth aspect, there is provided a system for generating an enhanced braking force for a braking system of a vehicle comprising a one-pedal driving (OPD) control system. The system comprises processing circuitry configured for obtaining a near-collision warning signal from a collision warning system of the vehicle, the near-collision warning signal being representative of a collision event determined based on sensor data representative of a surrounding environment of the vehicle. Further, the processing circuitry is configured for obtaining an operational position of an accelerator pedal of the vehicle configured for operating the vehicle by means of the OPD control system. The processing circuitry is further configured for generating, based on the obtained near-collision warning signal, a corresponding negative torque reinforcement factor to be applied to a normal braking force of the vehicle associated with each obtained operational position of the accelerator pedal, wherein the generated negative torque reinforcement factor correlates with a determined severity indicator of the determined collision event. Moreover, the corresponding negative torque reinforcement factor is generated based on a calculated time-to-collision (TTC) parameter for the determined collision event, comprised in the determined severity indicator of the determined collision event, and wherein the calculated time-to-collision parameter is larger than a pre-collision temporal threshold value for activation of an automated emergency braking system of the vehicleln response to the obtained operational position of the accelerator pedal corresponding to a predetermined operational position, the processing circuitry is further configured for applying the generated negative torque reinforcement factor to the normal braking force of the vehicle associated with the predetermined operational position. The processing circuitry is further configured for enhancing the braking force of the braking system of the vehicle with the applied negative torque reinforcement factor.

According to yet another fifth aspect, there is provided a vehicle comprising one or more vehicle-mounted sensors configured to monitor a surrounding environment of the vehicle. Further, the vehicle comprises a one-pedal driving (OPD) control system configured to operate the vehicle in the OPD setting. The vehicle further comprises a system according to the fourth aspect and various embodiments of the fourth aspect. The vehicle may further comprise an ADS system for controlling one or more of acceleration, steering, and braking of the vehicle.

Further embodiments of the different aspects are defined in the dependent claims.

It is to be noted that all the embodiments, elements, features and advantages associated with the first aspect also analogously apply to the second, third, fourth and the fifth aspects of the present invention.

These and other features and advantages of the present invention will in the following be further clarified in the following detailed description.

### BRIEF DESCRIPTION OF THE DRAWINGS

The above aspects, features and advantages of the disclosed technology, will be more fully appreciated by reference to the following illustrative and non-limiting detailed description of example embodiments of the present invention, when taken in conjunction with the accompanying drawings. The drawings are not to scale.
Fig. 1 illustrates a schematic top view of a road and at least one vehicle traveling on the road in accordance with several embodiments of the present invention.
Fig. 2a shows a schematic side view illustration of the vehicle in accordance with several embodiments of the present invention.
Fig. 2b shows a graph in accordance with several embodiments of the present invention.
Fig. 3 shows a schematic flowchart illustrating a method in accordance with several embodiments of the present invention.
Fig. 4 shows a schematic side view illustration of the vehicle comprising the control system in accordance with some embodiments of the present invention.

### DETAILED DESCRIPTION

The present invention will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present inventionis described in terms of a method, it may also be embodied in apparatus comprising one or more processors, one or more memories coupled to the one or more processors, where computer code is loaded to implement the method. For example, the one or more memories may store one or more computer programs that perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth. As used herein, the term "if" may be construed to mean "when or "upon" or "in an instance of" or "in response to determining or "in response to detecting" depending on the context. Similarly, the phrase "if it is determined' or "when it is determined" or "in an instance of" may be construed to mean "upon determining or "in response to determining" or "upon detecting and identifying occurrence of an event" or "in response to detecting occurrence of an event" depending on the context.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

In the following description of exemplary embodiments, the same reference numerals denote the same or similar components.

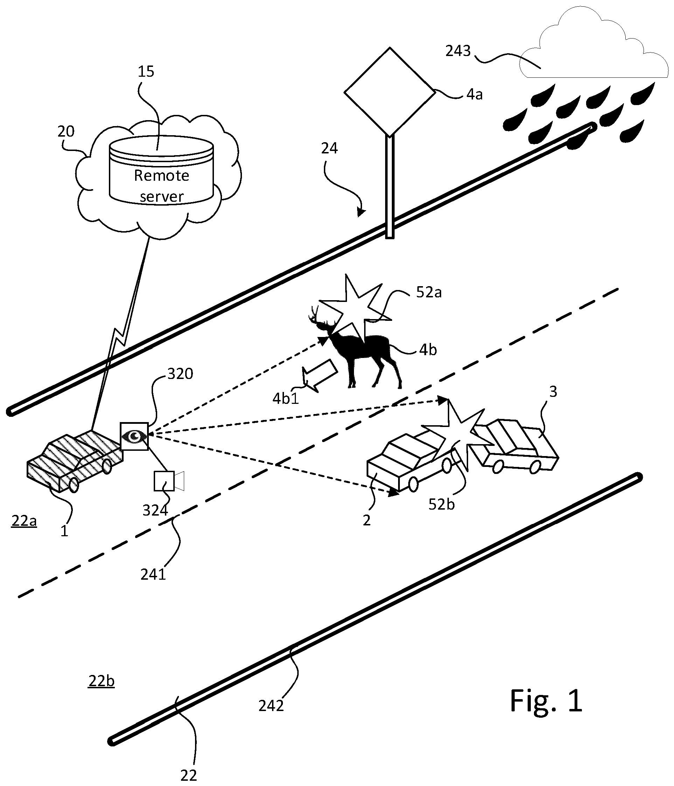

Fig. 1 illustrates a schematic perspective view of a vehicle 1 in a hatched-line shaded pattern traveling on a portion 24 of a road 22. Moreover, Fig. 1 shows at least one external vehicle 2, 3 traveling on the same portion 24 of a road 22 as the vehicle 1. In several embodiments and aspects, the vehicle 1 comprises a sensor system 320 configured for detecting scenarios which may occur in a surrounding environment of the vehicle 1. The sensor system 320 is thus configured for collection of information about the surrounding environment of the vehicle 1. The surrounding environment of the vehicle can be understood as a general area around the vehicle 1 in which scenarios comprising objects (such as other vehicles, landmarks, obstacles, etc.) or scenes can be detected and identified by vehicle sensors (radar, LIDAR, cameras, etc.), i.e. within a sensor range of the vehicle.

The vehicle 1 comprises a control system 10, which may otherwise be referred to as the control apparatus 10. The control system 10 of the vehicle 1 comprises control circuitry 11, otherwise referred to as processing circuitry 11, configured to obtain data comprising information about the surrounding environment of the vehicle 1. As mentioned earlier, the information and data of the surrounding environment of the vehicle 1 may be obtained from the sensor system 320 of the vehicle.

In several aspects and embodiments, the vehicle 1 comprises a one-pedal driving (OPD) control system 110 configured to operate the vehicle in the OPD configuration. The OPD control system 110 may be comprised in the control system 10 of the vehicle e.g. as a module or component of the control system 10 of the vehicle. In some embodiments, the OPD control system 110 may be a separate entity in communication with the control system 10 of the vehicle 1. The OPD enables application of a braking event to be performed without using a brake pedal of the vehicle. Instead, an accelerator pedal of the vehicle is utilized for applying a braking force when the accelerator pedal is lifted from the acceleration region. This way the vehicle 1 can be decelerated and even brought to a halt by using the OPD system.

In several aspects and embodiments, the vehicle 1 comprises a collision warning system 120. The collision warning system may be comprised in the control system 10 of the vehicle e.g. as a module or component of the control system 10 of the vehicle. In some embodiments, the collision warning system 120 may be a separate entity in communication with the control system 10 of the vehicle 1.

In several aspects and embodiments, the collision warning system 120 may comprise in or be in communication with an automated emergency brake (AEB) system 130 of the vehicle 1. The AEB system 130 may in turn be comprised in the control system 10 of the vehicle e.g. as a module or component of the control system 10 of the vehicle. In some embodiments, the AEB system 130 may be a separate entity in communication with the control system 10 of the vehicle 1. In several aspects and embodiments, the collision warning system 120 as well as the AEB system 130 may be configured to obtain data comprising information about the surrounding environment of the vehicle 1.

The information and data of the surrounding environment of the vehicle 1 may be obtained from the sensor system 320 of the vehicle. The collision warning system 120 and/or the AEB system 130 may obtain the sensor data directly from the sensor system 320. The collision warning system 120 and/or the AEB system 130 may otherwise obtain the sensor data indirectly from the control system 10 of the vehicle. Accordingly, the collision warning system 120 and/or the AEB system 130 may be configured to be in communication with the processing circuitry 11 of the control system 10 for obtaining and processing the sensor data from the sensor system 320 of the vehicle 1. The collision warning system 120 and/or the AEB system 130 may be configured for determining a collision event 52a, 52b in the surrounding environment of the vehicle 1 based on the obtained sensor data. Determining a collision even in the present context is to be construed as identifying and/or predicting the collision event.

In the rest of the description for sake of convenience, a collision warning system 120 will be used when referring to determining collision events and the corresponding actions taken by the vehicle 1. However, it should be appreciated that the collision events and the corresponding actions may be determined and performed by the collision warning system 120 and/or the AEB system 130 in conjunction with the control system 10 of the vehicle 1.

The obtained sensor data may comprise information about at least one static or moving object in the surrounding environment of the vehicle. As depicted in Fig. 1, there is at least one object 4a, 4b, 2, 3 present in the surrounding environment of the vehicle 1. The at least one object 4a, 4b may be a traffic object such a traffic sign or signal such as traffic lights or warning signs, etc. or in some embodiments may include wild life or various species of animals 4b, pedestrians (not shown), external vehicles 2, 3, road barriers, lane markers etc. The at least one object may be present on the road 22 at certain occasions such as the animal 4b crossing the road 22.

Further, the obtained sensor data may comprise information about any one of lane marker 241, 242 geometry on the one or more lanes of the road 22, lane marker type (e.g. solid, dashed, double marker, etc.) on the road 22, traffic sign information 4a, road barrier information, such as presence or characteristics of speed bumps, or any other road obstruction objects, etc.

In several examples and embodiments, the road 22 may be any type of road e.g. part of a motorway, freeway or expressway. The road may also be a country road, rural road, a part of a parking lot or part of a garage facility, or any other suitable carriageway. The road may have a plurality of lanes such as more than one lane in the same travelling direction e.g. two or more lanes 22a, 22b or at least one lane in each travelling direction as is usually the case for rural roads. The road 22 has two lanes 22a and 22b extending in the same direction in this example. The lanes 22a, 22b may comprise lane markers 241, 242 of different types e.g. lane marker 241 showing dashed lane marker type and the lane marker 242 showing solid lane marker type. In some examples, the road may lack any specific lane markings.

In some embodiments, the vehicle 1 may comprise an Automated Driving System (ADS). In the present context, the ADS comprises both ADAS and AD systems. In some embodiments, the ADS of the vehicle may comprise one or more ADS features that are preferably a level 2 feature or higher according to SAE J3016 levels of driving automation for on-road vehicles. In the present context, an ADS feature may be in the form of an autopilot feature, a traffic jam pilot, a highway pilot, or any other SAE J3016 level such as level 1 and higher ADS feature. In some embodiments, the control system 10 of the vehicle 1 may be a separate entity or may be a part of another control system such as the overall ADS architecture of the vehicle, and may accordingly be a module or component of the ADS.

In several aspects and embodiments, the sensor data may comprise one or more images of the surrounding environment of the vehicle being captured e.g. by a vehicle-mounted camera sensor device 324 as a part of the sensor system 320. The camera in the present context also includes a plurality of vehicle-mounted cameras mounted on several parts of the vehicle 1 for capturing images of a surrounding environment of the vehicle. Furthermore, the sensor data may comprise LIDAR or radar (not shown) observations of the surrounding environment of the vehicle 1.

In several embodiments and examples, the sensor data may at least partly be obtained in real time from the sensor system 320. In some exemplary embodiments, the sensor data may at least partly be obtained from the memory unit 12. Accordingly, the captured images and/or LIDAR and/or radar data may be stored locally in the memory 12 of the vehicle 1 and/or be transmitted to an external network 20 such as a cloud network 20, or to the remote server 15 with which the vehicle 1 is in communication.

Various aspects and embodiments of the presented technology, and the corresponding systems and methods may be implemented and executed by means of processing circuitry comprising one or more processors. The processing circuitry may at least partly be comprised in a control system or apparatus implemented in the vehicle 1. In some embodiments, the control system and processing circuitry may be a decentralized system and be implemented in the remote server 15 in communication with the vehicle 1.

In some embodiments, the control system 10 of the vehicle 1 may have access to the sensor observations of the external vehicles 2, 3 sharing the road traffic with vehicle 1. This way the collision warning system 120 may use the sensor observations of the external vehicles in determining a presence of the collision event on the road 22. The data may be obtained directly from the at least one external vehicle 2, 3 by vehicle to vehicle (V2V) communication when the at least one external vehicle is within range of direct V2V communication. The data can additionally or alternatively be obtained indirectly from the at least one external vehicle 2, 3 via the external network 20 having access to the sensor data of the at least one external vehicle 2, 3. In some embodiments the data may be obtained partly via the V2V communication and partly via the external network 20.

The control system 10 of the vehicle 1 may accordingly be configured to register and determine scenarios occurring in the surrounding environment of the vehicles 1. The scenarios in some embodiments may correspond to a scene or an event such an incident that may occur in the surrounding environment of the vehicle 1. In some embodiments, a scenario may be determining a presence of at least one object 4a, 4b, 2, 3 in the surrounding environment of the vehicle 1 based on the obtained sensor data. In several embodiments, the scenario comprises determining a collision event in the surrounding environment of the vehicle 1 based on the obtained sensor data.

For instance in Fig. 1, two scenarios corresponding to potential collision events 52a, 52b have been depicted by way of example. It should be clear to the skilled person that the depicted collision events 52a, 52b are simplified examples for merely elucidating the inventive systems and methods herein, and may not represent the accurate real-world circumstances associated with these scenarios. The skilled person also understands that many other arising situations and collision events may be comprised in different embodiments and aspects and equally considered for the purposes of the present invention.

In the first scenario, the animal 4b moving towards the vehicle 1 in the direction of arrow 4b1 is depicted on lane 22a. The collision warning system 120 may thus be configured to determine a collision event 52a with the animal 4b based on the obtained sensor data. The collision warning system 120 may thus predict the collision even 52a based on the trajectory of the animal 4b, range data, relative velocity data of the vehicle 1, etc. obtained from the sensor system 320 or the control system 10.

In the second scenario, an accident 52b has occurred on the road 22 and depicted on lane 22b by way of example, and still posing a safety threat to vehicle 1. The collision warning system 120 may thus be configured to determine the collision event 52b with the stationary vehicles 2, 3 involved in the accident 52b based on the obtained sensor data. The collision warning system 120 may thus identify the accident 52b and determine that the collision event 52b obliges the vehicle 1 to slow down and come to a full stop if necessary, because otherwise there is a risk of colliding with the determined accident 52b. In determination of either of the above collision events 52a, 52b, multitude of data and information such as the road condition, presence of permanent or temporary traffic signals on the road, environmental conditions such as weather conditions 243, etc. may be utilized by the collision warning system 130. A variety of other scenarios involving collision events in the surrounding environment of the vehicle 1 may be similarly determined by the collision warning system 120.

In various aspects and embodiments, the collision warning system 120 is configured to generate a near-collision warning signal being representative of the collision event 52a, 52b determined based on sensor data representative of the surrounding environment of the vehicle 1. In several embodiments and aspects, the generated near-collision warning signal may be obtained by the OPD system 110 of the vehicle 1, directly or indirectly via the control system 10.

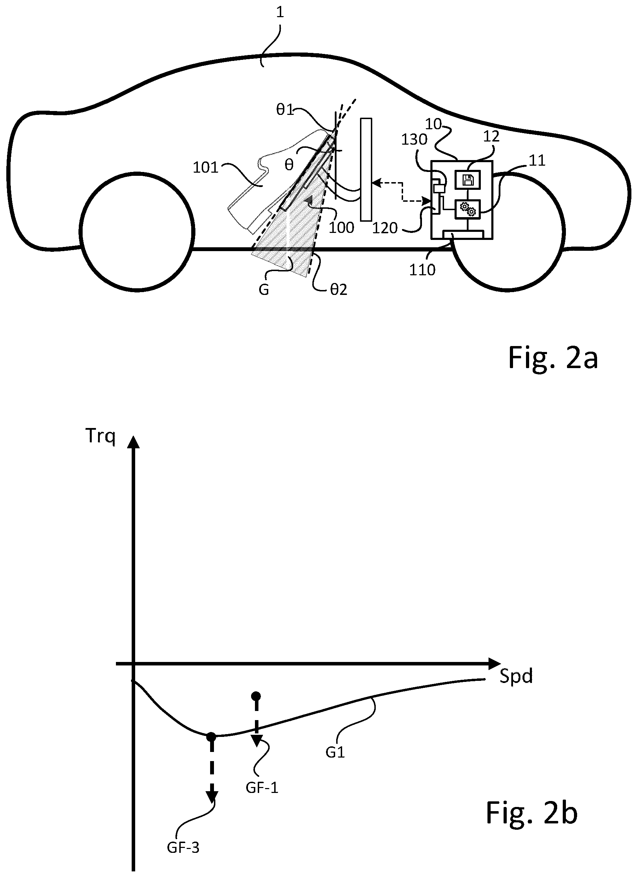

The control system 10 may further be configured to obtain an operational position of an accelerator pedal 100 of the vehicle 1. Fig. 2a illustrates a schematic drawing of the accelerator pedal 100 configured for operating the vehicle 1. The accelerator pedal may be configured for operating the vehicle 1 by means of the OPD control system 110 in the OPD mode. In several embodiments, the operational position of an accelerator pedal 100 may be obtained by the collision warning system 120. The operational position of an accelerator pedal 100 in the present context may be understood as an angle θ of the accelerator pedal 100 corresponding to a respective amount of stroke applied to the accelerator pedal 100 by a driver 101 of the vehicle 1. The angle of the accelerator pedal 100 at the full stroke may thus correspond to zero degrees and at full release i.e. no stroke may correspond to substantially 45 degrees. For instance the dashed line showing a first limit corresponds to angle θ1 representing a full release position of the pedal 100 and angle θ2 represents an operational position of the pedal closer to the full stroke position. The operational position and/or operation angle of the acceleration pedal 100 may be obtained by any means known in the art e.g. by means of an acceleration pedal sensor device.

Further, the control system 10 is configured for generating, based on the obtained near-collision warning signal, a corresponding negative torque reinforcement factor to be applied to a normal braking force of the vehicle. The normal braking force of the vehicle is associated with each obtained operational position of the accelerator pedal 100. Thus, the control system 10 is configured to apply the corresponding negative torque reinforcement factor to the respective normal braking force associated with each obtained accelerator pedal 100 position. The generated negative torque reinforcement factor correlates with a determined severity indicator of the determined collision event. The negative torque reinforcement factor may also be referred to as brake gain throughout this description. In other words, when the collision warning system 120 determines a collision event in the surrounding environment of the vehicle 1, a severity level of the collision event is also determined and associated with the determined collision event 52a, 52b. Based on this severity indicator, the control system 10 calculates the required amount of negative torque reinforcement factor to be applied to the normal braking force of the vehicle at each corresponding accelerator pedal 100 position. It should be appreciated that the collision warning system 120 determines the required amount of brake gain irrespective of the accelerator pedal functionality or accelerator pedal position and solely based on the determined severity of the determined collision event. The accelerator pedal 100 position may thus be used by the collision warning system 120 only when applying the generated negative torque reinforcement factor to the normal braking force of the vehicle 1, i.e., when the accelerator pedal position enters a predetermined region referred to as gain region, requesting the generated negative torque reinforcement factor as explained further below. In several embodiments and aspects, the normal amount of the braking force is the default amount of the braking force, which the OPD system 110 assigns to each accelerator pedal position. For instance, the default amount of the braking force at the full release of the accelerator pedal may correspond to a maximum brake torque e.g. 2 m/s² of deceleration, and so forth. In several aspects and embodiments, the required amount of negative torque reinforcement factor is calculated in real time. In some embodiments however, information for calculating the required amount of negative torque reinforcement factor may be retrieved from the memory of the vehicle 12 or from the remote server 15.

Moreover, the determined severity indicator of the determined collision event comprises a time-to-collision (TTC) parameter for each determined collision event 52a, 52b. Thus, the control system 10 is configured to generate the corresponding negative torque reinforcement factor based on a calculated time-to-collision parameter for the determined collision event. The calculated time-to-collision parameter is larger than a pre-collision temporal threshold value for activation of the AEB system 130 of the vehicle 1. In some embodiments, the TTC parameter may be calculated only when a collision event is determined by the collision warning system 120 and/or the AEB system 130. As mentioned above, the calculated TTC parameter is advantageously provided to be larger than the pre-collision temporal threshold value for activation of the AEB system 130. In other words, the systems and methods according to the inventive concepts provide an extended window of opportunity for identification and mitigation of traffic hazards before the vehicle 1 enters a danger zone, where the AEB system 130 must be activated to avoid an immediate collision event. For example, a TTC parameter of approximately 5 to 2 seconds may be calculated upon determination of a collision event. Thus, in the window of 5 to 2 seconds to an imminent collision, the control system 10 is configured to apply the braking gain to the default braking force of the vehicle, thus enhancing the braking system and assisting the vehicle 1 in pre-emptively avoiding the critical hazard zone and necessary activation of the AEB system 130. However, the TTC around 2 seconds may be set as the pre-collision temporal threshold value upon which activation of the AEB system 130 is necessary to avoid collision. Accordingly, the proposed solutions provide an advantage of improving traffic safety as well as user experience by avoiding critical collision events and preventing unnecessary last-minute activation of AEB systems. In some embodiments, e.g. during transition times of the calculated TTC for a pre-collision event to a TTC at the close proximity to the pre-collision temporal threshold value set to activate the AEB system 130, both systems i.e. the brake gain reinforcement by the OPD system 110 and the AEB system 130 may be active. In such scenarios, each system may request respective amounts of braking force for decelerating the vehicle 1 and the control system 10 may grant the request of the system with the largest braking force request and accord the control of the braking function of the vehicle 1 to that system. This way the two systems may be configured to work in unison, providing further augmented safety and efficiency in decelerating the vehicle 1.

The control system 10 is further configured for applying the generated negative torque reinforcement factor to the normal braking force of the vehicle 1 when the obtained operational position of the accelerator pedal 100 corresponds to a predetermined operational position. In several aspects and embodiments, the predetermined pedal 100 position of the accelerator pedal may relate to the respective operational angle of the accelerator pedal 100 determined by an amount of stroke applied to the accelerator pedal by the driver 101 of the vehicle 1. In several embodiments, the operational angle of the accelerator pedal may comprise a predetermined range "G" of angles θ1 - θ2 of the accelerator pedal 100 corresponding to a predetermined range of strokes S1- S2 applied to the accelerator pedal 100 by the driver 100. As mentioned above, the operational position of the accelerator pedal 100 may correspond to a complete release of the accelerator pedal by the driver. Accordingly, the hatched brake gain region "G" between the two dashed extremity lines θ1 and θ2 corresponds to an area of predetermined operation position of the pedal 100. The control system 10 is configured to apply the calculated brake gain to the default braking force of the vehicle 1 for each of the predetermined pedal positions in an instance that the pedal position assumes an operational angle within the brake gain "G" region. Accordingly, the control system 10 is configured for enhancing the braking force of the braking system of the vehicle with the applied negative torque reinforcement factor as explained above. Fig. 2b illustrates a diagram of the applied negative torque and the velocity of the vehicle 1 affected by the applied negative torque. In this example, the graph G1 illustrates the brake gain applied to the default braking force of the vehicle at the operating points in the negative range of the OPD system 110. For instance, at the operational angle θ2, a gain factor such as gain factor 1 (GF-1) calculated by the collision warning system 120 may be applied to the default braking force. It should be clear to the skilled person in the art that different gain factors other than GF-1 such as GF-2 or GF-3, etc. which may be larger or smaller than GF-1 may be generated and applied accordingly at the operational angle θ2. Similarly, at the operational angle θ1 corresponding to the full release of the accelerator pedal 100, an exemplary GF-3 being the maximum brake gain in this example may be applied to the default braking force. Accordingly, the applied brake gain factor will accentuate the deceleration not only on fully released but also at low accelerator pedal angles within the predetermined region "G".

In several aspects and embodiments, the control system 10 may further be configured for resetting the braking force to the normal braking force of the vehicle when it is determined that the determined collision event is avoided. More specifically, after the brake gain is applied by the control system 10 to the braking force of the vehicle 1 in the OPD mode, the control system 1 may further determine that the collision event has been successfully prevented e.g. based on the obtained sensor data and/or based on registering a stroke applied to the acceleration pedal 100 outside the brake gain area "G". When such determination is made by the control system 10, applying the calculated brake gain may accordingly be terminated. The brake force may thus be reset to the normal braking force of the vehicle.

It should be clear to the skilled person that all or some of the operations explained above may be partly or entirely performed by the collision warning system 120, the AEB system 130 and/or the OPD system 110 comprised in the control system 10 of the vehicle 1.

The present inventor has further realized that by the proposed solution herein, a preventive system and method can be implemented for improving traffic safety and driver reaction times by applying the generated brake gain to the normal braking force of the brake system of the vehicle upon determination of a near collision event. Further, the reaction of the driver in decelerating or releasing the acceleration pedal operating the vehicle in the OPD mode is advantageously registered and used for application of a proper corresponding brake gain calculated for each predetermined operation position of the accelerator pedal 100. This way, even the instances when the driver 101 has not yet made a decision to fully release the accelerator pedal 100, but is in a transition zone for making such decision, is also taken into account. In other words, upon assuming the predetermined operation position by the accelerator pedal 100 within the brake gain zone "G", the control system 10 readily applies the already calculated brake gain for that specific operation position and enhances the braking system. As a result, the reaction time to the determined collision event will be shortened, entering the immediate collision zone and necessary activation of the AEB system 130 will be prevented, and traffic safety will advantageously be ensured. A further advantage of the presented technology is to remove the driver's involvement for optionally turning off the OPD mode for generating and applying the brake gain, which provides an online safety system utilizing the OPD opportunities for collision avoidance and reaction time improvements.

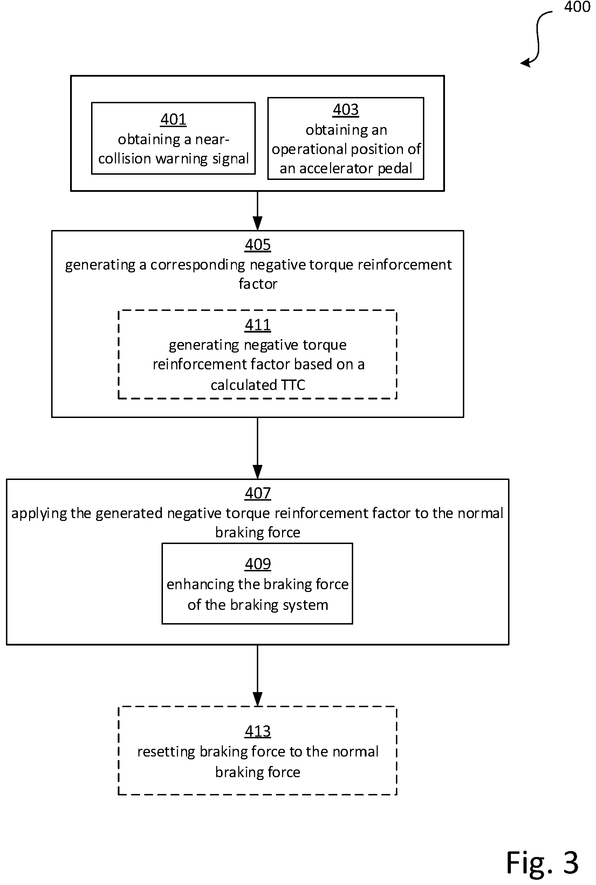

Fig. 3 shows a flowchart of a method **400** according to various aspects and embodiments of the present inventionand with reference to the technology presented in Fig. 1 and Fig. 2.

The computer-implemented method **400** is for generating an enhanced braking force for a braking system of a vehicle 1 comprising a one-pedal driving, OPD, control system 110. The method **400** comprises obtaining **401** a near-collision warning signal from a collision warning system of the vehicle 1, the near-collision warning signal being representative of a collision event determined based on sensor data representative of a surrounding environment of the vehicle. The method **400** further comprises obtaining **403** an operational position of an accelerator pedal 100 of the vehicle 1 configured for operating the vehicle by means of the OPD control system 110. Further, the method **400** comprises generating **405,** based on the obtained near-collision warning signal, a corresponding negative torque reinforcement factor to be applied to a normal braking force of the vehicle associated with each obtained operational position of the accelerator pedal 100. The generated negative torque reinforcement factor correlates with a determined severity indicator of the determined collision event. In response to the obtained operational position of the accelerator pedal corresponding to a predetermined operational position, the method **400** further comprises applying **407** the generated negative torque reinforcement factor to the normal braking force of the vehicle associated with the predetermined operational position. The method **400** further comprises enhancing **409** the braking force of the braking system of the vehicle with the applied negative torque reinforcement factor.

The method **400** further comprises generating **411** the corresponding negative torque reinforcement factor based on a calculated time-to-collision (TTC) parameter for the determined collision event. The calculated time-to-collision parameter for the determined collision event is comprised in the determined severity indicator of the determined collision event. The calculated time-to-collision parameter is larger than a pre-collision temporal threshold value for activation of an automated emergency braking system of the vehicle. Accordingly, the generated negative torque reinforcement factor correlates with the calculated TTC parameter and thus it is ensured that larger brake gains would be applied to the default braking force with shorter calculated TTC parameters. Hence, by ensuring that a corresponding brake gain is applied in each calculated TTC which is larger than the pre-collision temporal threshold value for activation of the AEB system 130, the unnecessary activation of the AEB system 130 would be avoided and user experience and safety improved as explained earlier.

In several embodiments, the predetermined operational position of the accelerator pedal 100 may relate to an operational angle θ of the accelerator pedal 100 determined by an amount of stroke applied to the accelerator pedal by the driver 101 of the vehicle 1. The operational angle of the accelerator pedal 100 may comprise any one of a predetermined range of angles θ1- θ2 of the accelerator pedal 100 corresponding to a predetermined range of strokes applied to the accelerator pedal 100 by the driver 101. Further, the operational angle of the accelerator pedal 100 may comprise an operational position of the accelerator pedal corresponding to a complete release of the accelerator pedal by the driver 101 i.e. substantially no stroke applied to the pedal 100.

In several embodiments, the method may further comprise resetting **413** braking force to the normal braking force of the vehicle when it is determined that the determined collision event may be avoided.

In several aspects and embodiments, the vehicle may comprise an Automated Driving System, ADS. In several aspects and embodiments, the method **400** may be performed by a control system 10 of the vehicle 1 comprising processing circuitry 11 configured for performing the various embodiments and steps of the method **400.** In several aspects and embodiments, the method **400** may be performed by a control system of the server 15 or data center 15 comprising processing circuitry configured for performing the various embodiments and steps of the method **400.**

It should be noted that all the embodiments, elements, features, examples and advantages described earlier with reference to the control system 10 of the vehicle 1, or the processing circuitry 11 of the control system 10, analogously and equally apply to various embodiments of the methods **400** described herein with reference to Fig. 3.

Executable instructions for performing these functions and embodiments of the method **400** are, optionally, included in a non-transitory computer-readable storage medium or other computer program product configured for execution by one or more processors.

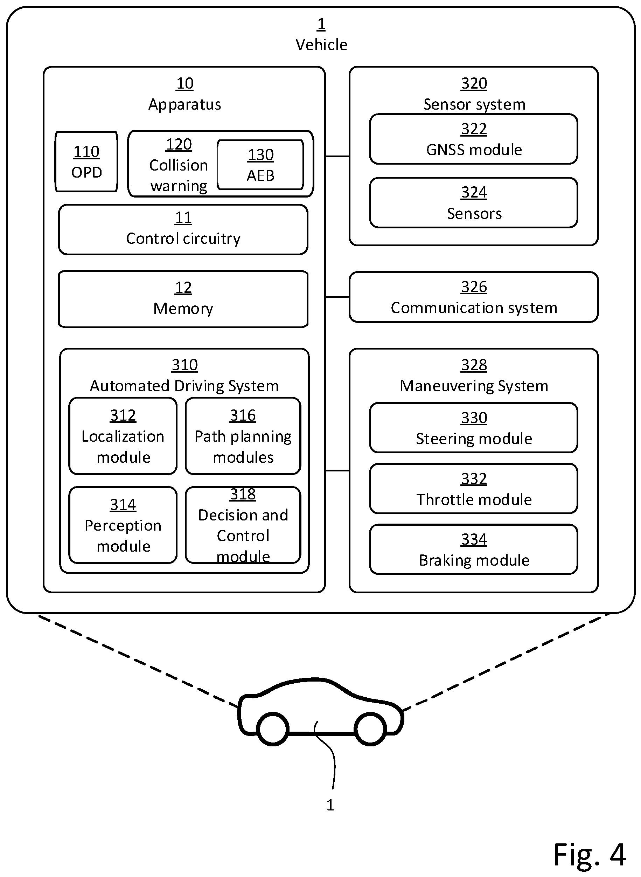

Fig. 4 is a schematic illustration of a vehicle 1 comprising a control system 10, which may also be referred to as the control apparatus or device 10 or simply the apparatus 10. As used herein, a "vehicle" is any form of motorized transport. For example, the vehicle 1 may be any road vehicle such as a car (as illustrated herein), a motorcycle, a (cargo) truck, a bus, etc. The vehicle 1 may be an electrical vehicle (EV) or a hybrid vehicle equipped with a one pedal drive (OPD) system 110. The vehicle 1 may comprise a collision warning system 120 and/or an AEB system 130, which may in turn be separate entities or may be comprised and implemented as a part of the control system 10.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the control system 10 may form a part of the ADS 310, i.e. the control system 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

The ADS may have access to map data, for instance be used by the ADS 310 of the vehicle 1 in order to perform autonomous functions of the vehicle 1 when implemented. The map data may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1 e.g. the AEB system 130 may be controlled by the ADS 310. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 4. Moreover, the vehicle 1 may comprise further elements than those shown in Fig. 4. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 4 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 326 may communicate using one or more communication technologies. The communication system 326 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 328. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320. The ADS 310 may also comprise other modules such as a path planning module 316.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

As previously mentioned, it should be appreciated that parts of the described solution may be implemented either in the vehicle 1, in a system located external the vehicle 1, or in a combination of internal and external the vehicle; for instance in a server 15 in communication with the vehicle, a so called cloud solution. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. . The above mentioned and described embodiments are only given as examples and should not be limiting to the present invention. Modifications within the scope of the invention as claimed in the below described patent claims should be apparent for the person skilled in the art.

## Claims

1. A computer-implemented method (400) for generating an enhanced braking force for a braking system of a vehicle comprising a one-pedal driving, OPD, control system, wherein the method comprises:
obtaining (401) a near-collision warning signal from a collision warning system of the vehicle, the near-collision warning signal being representative of a collision event determined based on sensor data representative of a surrounding environment of the vehicle;
obtaining (403) an operational position of an accelerator pedal of the vehicle configured for operating the vehicle by means of the OPD control system;
generating (411), based on the obtained near-collision warning signal, a corresponding negative torque reinforcement factor to be applied to a normal braking force of the vehicle associated with each obtained operational position of the accelerator pedal, wherein the generated negative torque reinforcement factor correlates with a determined severity indicator of the determined collision event;
wherein the corresponding negative torque reinforcement factor is generated (411) based on a calculated time-to-collision parameter for the determined collision event, comprised in the determined severity indicator of the determined collision event, and wherein the calculated time-to-collision parameter is larger than a pre-collision temporal threshold value for activation of an automated emergency braking system of the vehicle;
in response to the obtained (403) operational position of the accelerator pedal corresponding to a predetermined operational position:
applying (407) the generated negative torque reinforcement factor to the normal braking force of the vehicle associated with the predetermined operational position; and
enhancing (409) the braking force of the braking system of the vehicle with the applied negative torque reinforcement factor.

2. The method (400) according to claim 1, wherein the predetermined operational position of the accelerator pedal relates to an operational angle of the accelerator pedal determined by an amount of stroke applied to the accelerator pedal by a driver of the vehicle.

3. The method (400) according to claim 2, wherein the operational angle of the accelerator pedal comprises a predetermined range of angles of the accelerator pedal corresponding to a predetermined range of strokes applied to the accelerator pedal by the driver.

4. The method (400) according to any one of the preceding claims, wherein the method further comprises:
resetting (413) braking force to the normal braking force of the vehicle when it is determined that the determined collision event is avoided.

5. A computer-readable storage medium comprising instructions which, when executed by one or more processors of a computing device of a vehicle comprising an OPD control system, causes the computing device to carry out the method (400) according to any one of the preceding claims.

6. A computer program product comprising instructions which, when the program is executed by one or more processors of a computing device of a vehicle comprising an OPD control system, causes the computing device to carry out the method (400) according to any one of claims 1 - 4.

7. A system (10) for generating an enhanced braking force for a braking system of a vehicle (1) comprising a one-pedal driving, OPD, control system (110), wherein the system (10) comprises processing circuitry (11) configured for:
obtaining a near-collision warning signal from a collision warning system (120) of the vehicle, the near-collision warning signal being representative of a collision event determined based on sensor data representative of a surrounding environment of the vehicle (1);
obtaining an operational position of an accelerator pedal (100) of the vehicle (1) configured for operating the vehicle by means of the OPD control system (110);
generating, based on the obtained near-collision warning signal, a corresponding negative torque reinforcement factor to be applied to a normal braking force of the vehicle (1) associated with each obtained operational position of the accelerator pedal (100), wherein the generated negative torque reinforcement factor correlates with a determined severity indicator of the determined collision event;
wherein the corresponding negative torque reinforcement factor is generated based on a calculated time-to-collision parameter for the determined collision event, comprised in the determined severity indicator of the determined collision event, and wherein the calculated time-to-collision parameter is larger than a pre-collision temporal threshold value for activation of an automated emergency braking system (130) of the vehicle (1);
in response to the obtained operational position of the accelerator pedal (100) corresponding to a predetermined operational position, the processing circuitry (11) is further configured for:
applying the generated negative torque reinforcement factor to the normal braking force of the vehicle (1) associated with the predetermined operational position; and
enhancing the braking force of the braking system of the vehicle (1) with the applied negative torque reinforcement factor.

8. The system (1) according to claim 7, wherein the predetermined operational position of the accelerator pedal (100) relates to an operational angle (θ) of the accelerator pedal (100) determined by an amount of stroke applied to the accelerator pedal by a driver (101) of the vehicle.

9. The system (10) according to any one of claims 7-8, wherein the operational angle of the accelerator pedal (100) comprises a predetermined range of angles (θ1- θ2) of the accelerator pedal (100) corresponding to a predetermined range of strokes applied to the accelerator pedal (100) by the driver (101).

10. The system (10) according to any one of claims 7-9, wherein the processing circuitry (11) is further configured for:
resetting braking force to the normal braking force of the vehicle (1) when it is determined that the determined collision event is avoided.

11. A vehicle (1) comprising:
one or more vehicle-mounted sensors (324) configured to monitor a surrounding environment of the vehicle (1);
a one-pedal driving, OPD, control system (110) configured to operate the vehicle in the OPD setting; and
a system (10) according to any one of claims 7-10.

## Patentansprüche

1. Computerimplementiertes Verfahren (400) zur Erzeugung einer verstärkten Bremskraft für ein Bremssystem eines Fahrzeugs, das ein Ein-Pedal-Antriebs-Steuerungssystem, OPD-Steuerungssystem, umfasst, wobei das Verfahren Folgendes umfasst:
Erhalten (401) eines Fast-Kollision-Warnsignals von einem Kollisionswarnsystem des Fahrzeugs, wobei das Fast-Kollision-Warnsignal ein Kollisionsereignis darstellt, das basierend auf Sensordaten bestimmt wird, die eine umliegende Umgebung des Fahrzeugs darstellen;
Erhalten (403) einer Betriebsposition eines Fahrpedals des Fahrzeugs, die dazu konfiguriert ist, das Fahrzeug mittels des OPD-Steuerungssystems zu betreiben;
Erzeugen (411), basierend auf dem erhaltenen Fast-Kollision-Warnsignal, eines entsprechenden Negativdrehmomentverstärkungsfaktors, der auf eine normale Bremskraft des Fahrzeugs, die mit jeder erhaltenen Betriebsposition des Gaspedals assoziiert ist, auszuüben ist, wobei der erzeugte Negativdrehmomentverstärkungsfaktor mit einem bestimmten Schwereindikator des bestimmten Kollisionsereignisses korreliert;
wobei der entsprechende Negativdrehmomentverstärkungsfaktor basierend auf einem berechneten Zeit-bis-zur-Kollision-Parameter für das bestimmte Kollisionsereignis, der in dem bestimmten Schwereindikator des bestimmten Kollisionsereignisses umfasst ist, erzeugt wird (411), und wobei der berechnete Zeit-bis-zur-Kollision-Parameter größer als ein zeitlicher Vorkollisionsschwellenwert für eine Aktivierung eines automatisierten Notbremssystems des Fahrzeugs ist;
als Reaktion darauf, dass die erhaltene (403) Betriebsposition des Fahrpedals einer vorbestimmten Betriebsposition entspricht:
Ausüben (407) des erzeugten Negativdrehmomentverstärkungsfaktors auf die normale Bremskraft des Fahrzeugs, die mit der vorbestimmten Betriebsposition assoziiert ist; und
Verstärken (409) der Bremskraft des Bremssystems des Fahrzeugs mit dem ausgeübten Negativdrehmomentverstärkungsfaktor.

2. Verfahren (400) nach Anspruch 1, wobei sich die vorbestimmte Betriebsposition des Fahrpedals auf einen Betriebswinkel des Fahrpedals bezieht, der durch einen Trittbetrag bestimmt wird, der auf das Fahrpedal durch einen Fahrer des Fahrzeugs ausgeübt wird.

3. Verfahren (400) nach Anspruch 2, wobei der Betriebswinkel des Fahrpedals eine vorbestimmte Spanne an Winkeln des Fahrpedals entsprechend einer vorbestimmten Spanne an Tritten, die auf das Fahrpedal durch den Fahrer ausgeübt wird, umfasst.

4. Verfahren (400) nach einem der vorhergehenden Ansprüche, wobei das Verfahren ferner Folgendes umfasst:
Zurücksetzen (413) einer Bremskraft auf die normale Bremskraft des Fahrzeugs, wenn bestimmt wird, dass das bestimmte Kollisionsereignis vermieden wird.

5. Computerlesbares Speichermedium, das Anweisungen umfasst, die, wenn sie durch einen oder mehrere Prozessoren einer Rechenvorrichtung eines Fahrzeugs, das ein OPD-Steuerungssystem umfasst, ausgeführt werden, die Rechenvorrichtung dazu veranlassen, das Verfahren (400) nach einem der vorhergehenden Ansprüche durchzuführen.

6. Computerprogrammprodukt, das Anweisungen umfasst, die, wenn das Programm durch einen oder mehrere Prozessoren einer Rechenvorrichtung eines Fahrzeugs, das ein OPD-Steuerungssystem umfasst, ausgeführt wird, die Rechenvorrichtung dazu veranlassen, das Verfahren (400) nach einem der Ansprüche 1-4 durchzuführen.

7. System (10) zur Erzeugung einer verstärkten Bremskraft für ein Bremssystem eines Fahrzeugs (1), das ein Ein-Pedal-Antriebs-Steuerungssystem, OPD-Steuerungssystem (110), umfasst, wobei das System (10) eine Verarbeitungsschaltung (11) umfasst, die zu Folgendem konfiguriert ist:
Erhalten eines Fast-Kollision-Warnsignals von einem Kollisionswarnsystem (120) des Fahrzeugs, wobei das Fast-Kollision-Warnsignal ein Kollisionsereignis darstellt, das basierend auf Sensordaten bestimmt wird, die eine umliegende Umgebung des Fahrzeugs (1) darstellen;
Erhalten einer Betriebsposition eines Fahrpedals (100) des Fahrzeugs (1), die dazu konfiguriert ist, das Fahrzeug mittels des OPD-Steuerungssystems (110) zu betreiben;
Erzeugen, basierend auf dem erhaltenen Fast-Kollision-Warnsignal, eines entsprechenden Negativdrehmomentverstärkungsfaktors, der auf eine normale Bremskraft des Fahrzeugs (1), die mit jeder erhaltenen Betriebsposition des Gaspedals (100) assoziiert ist, auszuüben ist, wobei der erzeugte Negativdrehmomentverstärkungsfaktor mit einem bestimmten Schwereindikator des bestimmten Kollisionsereignisses korreliert;
wobei der entsprechende Negativdrehmomentverstärkungsfaktor basierend auf einem berechneten Zeit-bis-zur-Kollision-Parameter für das bestimmte Kollisionsereignis, der in dem bestimmten Schwereindikator des bestimmten Kollisionsereignisses umfasst ist, erzeugt wird und wobei der berechnete Zeit-bis-zur-Kollision-Parameter größer als ein zeitlicher Vorkollisionsschwellenwert für Aktivierung eines automatisierten Notbremssystems (130) des Fahrzeugs (1) ist;
wobei als Reaktion darauf, dass die erhaltene Betriebsposition des Fahrpedals (100) einer vorbestimmten Betriebsposition entspricht, die Verarbeitungsschaltung (11) ferner zu Folgendem konfiguriert ist:
Ausüben des erzeugten Negativdrehmomentverstärkungsfaktors auf die normale Bremskraft des Fahrzeugs (1), die mit der vorbestimmten Betriebsposition assoziiert ist; und
Verstärken der Bremskraft des Bremssystems des Fahrzeugs (1) mit dem ausgeübten Negativdrehmomentverstärkungsfaktor.

8. System (1) nach Anspruch 7, wobei sich die vorbestimmte Betriebsposition des Fahrpedals (100) auf einen Betriebswinkel (θ) des Fahrpedals (100) bezieht, der durch einen Trittbetrag bestimmt wird, der auf das Fahrpedal durch einen Fahrer (101) des Fahrzeugs ausgeübt wird.

9. System (10) nach Anspruch einem der Ansprüche 7-8, wobei der Betriebswinkel des Fahrpedals (100) eine vorbestimmte Spanne an Winkeln (θ1-θ2) des Fahrpedals (100) entsprechend einer vorbestimmten Spanne an Tritten, die auf das Fahrpedal (100) durch den Fahrer (101) ausgeübt wird, umfasst.

10. System (10) nach einem der Ansprüche 7-9, wobei die Verarbeitungsschaltung (11) ferner zu Folgendem konfiguriert ist:
Zurücksetzen einer Bremskraft auf die normale Bremskraft des Fahrzeugs (1), wenn bestimmt wird, dass das bestimmte Kollisionsereignis vermieden wird.

11. Fahrzeug (1), umfassend:
einen oder mehrere fahrzeugmontierte Sensoren (324), die dazu konfiguriert sind, eine umliegende Umgebung des Fahrzeugs (1) zu überwachen;
ein Ein-Pedal-Antriebs-Steuerungssystem, OPD-Steuerungssystem (110), das dazu konfiguriert ist, das Fahrzeug in der OPD-Einstellung zu betreiben; und
ein System (10) nach einem der Ansprüche 7-10.

## Revendications

1. Procédé (400) mis en œuvre par ordinateur pour la génération d'une force de freinage améliorée pour un système de freinage d'un véhicule comprenant un système de commande de conduite à pédale unique, OPD, dans lequel le procédé comprend :
l'obtention (401) d'un signal d'avertissement de quasi-collision provenant d'un système d'avertissement de collision du véhicule, le signal d'avertissement de quasi-collision étant représentatif d'un événement de collision déterminé sur la base de données de capteur représentatives d'un environnement environnant du véhicule ;
l'obtention (403) d'une position opérationnelle d'une pédale d'accélérateur du véhicule configurée pour faire fonctionner le véhicule au moyen du système de commande OPD ;
la génération (411), sur la base du signal d'avertissement de quasi-collision obtenu, d'un facteur de renforcement de couple négatif correspondant à appliquer à une force de freinage normale du véhicule associée à chaque position opérationnelle obtenue de la pédale d'accélérateur, dans lequel le facteur de renforcement de couple négatif généré corrèle avec un indicateur de gravité déterminé de l'événement de collision déterminé ;
dans lequel le facteur de renforcement de couple négatif correspondant est généré (411) sur la base d'un paramètre de temps avant collision calculé pour l'événement de collision déterminé, compris dans l'indicateur de gravité déterminé de l'événement de collision déterminé, et dans lequel le paramètre de temps avant collision calculé est supérieur à une valeur de seuil temporel de pré-collision pour l'activation d'un système de freinage d'urgence automatisé du véhicule ;
en réponse à la position opérationnelle obtenue (403) de la pédale d'accélérateur correspondant à une position opérationnelle prédéterminée :
l'application (407) du facteur de renforcement de couple négatif généré à la force de freinage normale du véhicule associée à la position opérationnelle prédéterminée ; et
l'amélioration (409) de la force de freinage du système de freinage du véhicule avec le facteur de renforcement de couple négatif appliqué.

2. Procédé (400) selon la revendication 1, dans lequel la position opérationnelle prédéterminée de la pédale d'accélérateur se rapporte à un angle opérationnel de la pédale d'accélérateur déterminé par une quantité de course appliquée à la pédale d'accélérateur par un conducteur du véhicule.

3. Procédé (400) selon la revendication 2, dans lequel l'angle opérationnel de la pédale d'accélérateur comprend une plage prédéterminée d'angles de la pédale d'accélérateur correspondant à une plage prédéterminée de courses appliquées à la pédale d'accélérateur par le conducteur.

4. Procédé (400) selon l'une quelconque des revendications précédentes, dans lequel le procédé comprend en outre :
la réinitialisation (413) de la force de freinage à la force de freinage normale du véhicule lorsqu'il est déterminé que l'événement de collision déterminé est évité.

5. Support de stockage lisible par ordinateur comprenant des instructions qui, lorsqu'elles sont exécutées par un ou plusieurs processeurs d'un dispositif informatique d'un véhicule comprenant un système de commande OPD, amène le dispositif informatique à réaliser le procédé (400) selon l'une quelconque des revendications précédentes.

6. Produit de programme informatique comprenant des instructions qui, lorsque le programme est exécuté par un ou plusieurs processeurs d'un dispositif informatique d'un véhicule comprenant un système de commande OPD, amène le dispositif informatique à réaliser le procédé (400) selon l'une quelconque des revendications 1 à 4.

7. Système (10) pour générer une force de freinage améliorée pour un système de freinage d'un véhicule (1) comprenant un système de commande de conduite à pédale unique, OPD (110), dans lequel le système (10) comprend un circuit de traitement (11) configuré pour :
obtenir un signal d'avertissement de quasi-collision provenant d'un système d'avertissement de collision (120) du véhicule, le signal d'avertissement de quasi-collision étant représentatif d'un événement de collision déterminé sur la base de données de capteur représentatives d'un environnement environnant du véhicule (1) ;
obtenir une position opérationnelle d'une pédale d'accélérateur (100) du véhicule (1) configurée pour faire fonctionner le véhicule au moyen du système de commande OPD (110) ;
générer, sur la base du signal d'avertissement de quasi-collision obtenu, un facteur de renforcement de couple négatif correspondant à appliquer à une force de freinage normale du véhicule (1) associée à chaque position opérationnelle obtenue de la pédale d'accélérateur (100), dans lequel le facteur de renforcement de couple négatif généré corrèle avec un indicateur de gravité déterminé de l'événement de collision déterminé ;
dans lequel le facteur de renforcement de couple négatif correspondant est généré sur la base d'un paramètre de temps avant collision calculé pour l'événement de collision déterminé, compris dans l'indicateur de gravité déterminé de l'événement de collision déterminé, et dans lequel le paramètre de temps avant collision calculé est supérieur à une valeur de seuil temporel de pré-collision pour l'activation d'un système de freinage d'urgence automatisé (130) du véhicule (1) ;
en réponse à la position opérationnelle obtenue de la pédale d'accélérateur (100) correspondant à une position opérationnelle prédéterminée, le circuit de traitement (11) est en outre configuré pour :
appliquer le facteur de renforcement de couple négatif généré à la force de freinage normale du véhicule (1) associée à la position opérationnelle prédéterminée ; et
améliorer la force de freinage du système de freinage du véhicule (1) avec le facteur de renforcement de couple négatif appliqué.

8. Système (1) selon la revendication 7, dans lequel la position opérationnelle prédéterminée de la pédale d'accélérateur (100) se rapporte à un angle opérationnel (θ) de la pédale d'accélérateur (100) déterminé par une quantité de course appliquée à la pédale d'accélérateur par un conducteur (101) du véhicule.

9. Système (10) selon l'une quelconque des revendications 7 à 8, dans lequel l'angle opérationnel de la pédale d'accélérateur (100) comprend une plage prédéterminée d'angles (θ1-θ2) de la pédale d'accélérateur (100) correspondant à une plage prédéterminée de courses appliquées à la pédale d'accélérateur (100) par le conducteur (101).

10. Système (10) selon l'une quelconque des revendications 7 à 9, dans lequel le circuit de traitement (11) est en outre configuré pour :
réinitialiser la force de freinage à la force de freinage normale du véhicule (1) lorsqu'il est déterminé que l'événement de collision déterminé est évité.

11. Véhicule (1) comprenant :
un ou plusieurs capteurs montés sur véhicule (324) configurés pour surveiller un environnement environnant du véhicule (1) ;
un système de commande de conduite à pédale unique, OPD (110) configuré pour faire fonctionner le véhicule dans la configuration OPD ; et
un système (10) selon l'une quelconque des revendications 7 à 10.
